# EUROPÄISCHE PATENTSCHRIFT

(11) **EP 0 774 376 B1**
(45) Veröffentlichungstag und Bekanntmachung des Hinweises auf die Patenterteilung: **07.11.2001**
(21) Anmeldenummer: 96113881.5
(22) Anmeldetag: 30.08.1996
(51) Int. Cl.: B60N 2/36

(54) **Kraftfahrzeug mit einer Rücksitzbank**
Motor car with rear seat bench
Véhicule automobile à banquette arrière

(30) Priorität: 20.11.1995 DE 19543173
(43) Veröffentlichungstag der Anmeldung: 21.05.1997
(73) Patentinhaber: Volkswagen Aktiengesellschaft, 38436 Wolfsburg (DE)
(72) Erfinder: Möker, Carsten, Dipl.-Ing., 38471 Rühen (DE); Coester, Wilhelm, 38440 Wolfsburg (DE)

(56) Entgegenhaltungen:
- EP-A- 0 417 532
- EP-A- 0 689 955
- WO-A-94/12806
- DE-A- 19 546 646
- FR-A- 1 371 788
- US-A- 3 578 376
- US-A- 3 730 586

## Beschreibung

Die Erfindung betrifft ein Kraftfahrzeug mit einer Rücksitzbank gemäß dem Oberbegriff von Anspruch 1. Diese weist eine ganz oder teilweise umlegbare Rückenlehne auf, welche unten über mindestens ein Schwenklager schwenkbar mit einem Sitzteil der Rücksitzbank oder einer Karosserie des Kraftfahrzeugs und oben über mindestens ein Schloß lösbar mit der Karosserie verbunden ist. Ein derartiges Kraftfahrzeug mit Rücksitzbank ist in der DE 43 41952 beschrieben.

Bei vielen Personenkraftfahrzeugen weist die Rücksitzbank eine umlegbare Rückenlehne auf, die sich bei Bedarf zur Vergrößerung des Gepäckraums nach vorne klappen läßt. Die Rückenlehne ist in den meisten Fällen entweder am Sitzteil der Rücksitzbank befestigt, wobei sich das Schwenklager zwischen dem Sitzteil und der Rückenlehne befindet, so daß sich diese auf das Sitzteil umlegen und ggf. zusammen mit dem Sitzteil um dessen Vorderkante in eine vertikale Endstellung hochkant klappen läßt, oder die Rückenlehne ist an ihrer Unterseite in einem karosseriefesten Schwenklager schwenkbar gelagert und läßt sich nach einem vorherigen Hochklappen des Sitzteils der Rücksitzbank nach vorne umlegen, wobei sie zumeist eine horizontale Endstellung einnimmt, in der ihre Rückseite in Verlängerung des Gepäckraumbodens angeordnet ist. Bei einigen Personenkraftfahrzeugmodellen läßt sich nur die Hälfte der Rückenlehne umlegen, während sich bei wieder anderen Modellen wahlweise die halbe oder ganze Rückenlehne umlegen läßt. Um die umlegbaren Rückenlehnen in ihrer aufrechten Sitzstellung zu halten, weisen sie gewöhnlich an ihrem oberen Ende an beiden Seiten ein Schloß zum Verriegeln der Rückenlehnen mit einem karosseriefesten Sicherungsbolzen auf.

Umklappbare Rückenlehnen sind sehr praktisch, da sich damit das Gepäckraumvolumen erheblich vergrößern läßt, wodurch der Transport von sperrigen Gegenständen ermöglicht wird. Jedoch hat sich herausgestellt, daß es insbesondere bei schweren Frontalzusammenstößen und voll beladenem Gepäckraum zu einem Ausreißen der Schwenklager und/oder der Schlösser kommen kann, was in einigen Fällen schwerste Verletzungen von Fahrzeuginsassen zur Folge hatte (vgl. ADAC motorwelt 11/95, S. 50 - 53 und ADAC motorwelt 7/92, S. 38 bis 43). Soweit aufgrund dieser Unfallfolgen von den Kraftfahrzeugherstellern Maßnahmen ergriffen wurden, bestanden diese in einer Vergrößerung der Stabilität der Schwenklager und/oder Schlösser durch eine größere Dimensionierung von deren Elementen oder Halterungen, um damit in Deutschland die Vorgaben durch die DIN 75410-2 zu erfüllen. Das diese DIN-Norm jedoch eine Prüfung der Rückenlehnen mit einem Prüfgewicht von 2 x 18 kg und bei einer Bremsbeschleunigung von 20 g über 30 Millisekunden entsprechend einer Aufprallgeschwindigkeit von etwa 40 km/h vorsieht, kann auch bei Erfüllung der DIN-Norm nicht ausgeschlossen werden, daß es bei höheren Aufprallgeschwindigkeiten und/oder einer schwereren Gepäckraumbeladung zu Unfällen kommt, bei denen die Schwenklager und/oder Schlösser durch den Aufprall von Transportgegenständen gegen die Rückseite der aufrechten Rückenlehne ganz oder teilweise ausreißen und damit Verletzungen der Fahrzeuginsassen nach sich ziehen, wie sie in den vorgenannten Zeitschriftenartikeln beschrieben sind.

Diese Thematik wird auch in der gattungsbildenden DE 43 41 952 A1 beschrieben. Dort wird für obere und untere Lehnenlager vorgeschlagen, diesen ein Deformationselement nach Art eine Faltenbalges zuzuordnen, der Kräfte bis zu einer vorgegebenen Grösse übertragen kann, sich bei größeren Kräften jedoch unter Energieaufnahme verformt. Dieser Lösung liegt der Gedanke zugrunde, ein Ausreißen der Lehnenlager nicht durch eine Vergrößerung der Stabilität sondern durch einen gezielten Abbau der kinetischen Energie der auf die Rückenlehne aufprallenden Transportgegenstände zu verhindern. Dies erfolgt dadurch, daß die kinetische Energie in den Deformationselementen in Verformungsarbeit umgewandelt wird.

Zur Abrundung des Standes der Technik werden noch die FR-A-1371788, WO-94/12806, US-A-3 578 376, EP-A-0 417 532 und US-A-3 730 586 genannt, die allesamt den Einsatz von Enrgieabsorptionselementen im Zusammenhang mit Sitzkonstruktionen offenbaren. Hinweise zu der vorstehend beschrieben Problematik zum Schutz der Fahrzeuginsassen vor trägheitsbedingter Verlagerung von Ladegut im Gepäckraum eines Fahrzeuges sind diesen Dokumenten jedoch nicht entnehmbar.

Ausgehend hiervon liegt der Erfindung die Aufgabe zugrunde, den Aufbau gattungsgemässer Kraftfahrzeuge zu vereinfachen.

Diese Aufgabe wird erfindungsgemäß dadurch gelöst, daß das Deformationselement ein Bügel mit wellen- oder zickzackförmig gebogenen Schenkeln ist, der im Bereich seines Jochs eine vom Joch und den Schenkeln gebildete Aufnahmeöffnung für einen Schwenkbolzen des Schwenklagers oder ein Riegelelement des Schlosses aufweist, womit es ermöglicht wird, das Deformationselement unmittelbar als Teil des Schwenklagers oder Schlosses auszubilden. Jedoch kann alternativ dazu das wellen- oder zickzackförmige Element auch im Bereich einer Halterung angeordnet sein, die das Schwenklager bzw. das Schloß mit der Rückenlehne, dem Sitzteil oder der Karosserie verbindet.

Der **Bügel als** Deformationselement kann also jeweils eines der im Schwenk- bzw. Verriegelungseingriff stehenden Elemente der Schwenklager oder Schlösser selbst sein oder einen Teil der Halterungen dieser Elemente bilden, über welche diese entweder an der Rückenlehne oder an der Karosserie bzw. am Sitzteil starr befestigt sind.

Die **erfindungsgemässe Lösung erlaubt** eine plastische Verformung des **Bügels** derart, daß dabei die Verbindung zwischen der Rückenlehne einerseits und der Karosserie und/oder dem Sitzteil andererseits aufrechterhalten bleibt, wobei allerdings je nach Anordnung des Bügels, d.h. im Schwenklager oder Schloß selbst oder in deren Halterungen die Funktionsfähigkeit des Schwenklagers oder Schlosses zumindest im zuerst genannten Fall nicht mehr vorhanden sein braucht. Die plastische Verformung des Bügels erfolgt außerdem bevorzugt derart, daß sich dabei das obere und/oder untere Ende der Rückenlehne gegenüber der Karosserie und/oder dem Sitzteil in Fahrtrichtung nach vorne verschiebt, um den Bremsweg zu vergrößern und damit die Bremsbeschleunigung und die einwirkenden Kräfte zu verringern.

Um zu verhindern, daß das Schwenklager und/oder Schloß bei einem Aufprall von Transportgegenständen gegen die Rückenlehne an einer anderen Stelle durch Überschreiten der Bruch- oder Reißfestigkeit zerstört wird, sieht eine weitere bevorzugte Ausgestaltung der Erfindung vor, daß der **Bügel** so ausgelegt ist, daß er das schwächste Glied unter den Elementen des Schwenklagers und/oder Schlosses bildet. Bevorzugt ist die Dimensionierung des Bügels so gewählt, daß es erst dann zu einer Verformung anderer Elemente des Schwenklagers oder Schlosses kommt, wenn sich der Bügel bereits ganz oder zumindest weitgehend verformt hat.

**Eine bevorzugte Ausgestaltung der Erfindung** sieht vor, daß die für eine Verformung des **Bügels** erforderliche Kraft mit zunehmender Verformung des **Bügels** zunimmt. Dies kann dadurch erreicht werden, daß die bei einem Aufprall von Transportgegenständen gegen die Rückenlehne einwirkenden Kräfte **den Bügel** unter Begradigung der Wellen- oder Zickzackform **strecken.** In diesem Fall erfolgt die Verformung des Deformationselements am Anfang nahezu ausschließlich durch Biegen und/oder Streckung, wobei der Hebelarm der Kraftansatzpunkte der die Verbiegung bewirkenden Kräfte allmählich kleiner wird, so daß der Biegeverformung ein zunehmend größer werdender Widerstand entgegengesetzt wird.

Alternativ dazu kann der Bügel mindestens einen Schlitz aufweisen, in den ein Aufweitkörper eingreift, dessen Abmessungen in Richtung der Breite des Schlitzes größer als die letztere sind, wobei der Aufweitkörper und ein mit dem Schlitz versehener Teil des Deformationselements gegeneinander verschiebbar sind. Das heißt, der Aufweitkörper verschiebt sich bei Überschreiten der vorgegebenen Kraft unter plastischer Aufweitung des Schlitzes innerhalb desselben, wobei kinetische Energie in Verformungsarbeit umgewandelt wird. Eine Zunahme der zur Aufweitung des Schlitzes erforderlichen Kraft in Abhängigkeit von der bereits erfolgten Verformung kann hier beispielsweise dadurch erreicht werden, daß sich der Schlitz in Bewegungsrichtung des Aufweitkörpers leicht verjüngt, so daß die Ränder des Schlitzes für einen Hindurchtritt des Aufweitkörpers weiter auseinandergedrückt werden müssen. Alternativ dazu könnten die Ränder des Schlitzes in Bewegungsrichtung des Aufweitkörpers auch ein zunehmendes Biegewiderstandsmoment aufweisen.

Im folgenden wird die Erfindung anhand einiger in der Zeichnung dargestellter Ausführungsbeispiele näher erläutert.

Es zeigen:
- Fig. 1:: eine Seitenansicht einer Rücksitzbank mit einem Schwenklager zwischen dem Sitzteil und der Rückenlehne und einem Schloß am oberen Ende der Rückenlehne, wobei sowohl das Schloß als auch das Schwenklager Deformationselemente aufweisen;
- Fig. 2:: eine Seitenansicht einer Rücksitzbank mit teilweise hochgeklapptem Sitzteil und einem Schwenklager zwischen der Rückenlehne und der Karosserie, das mit einem Deformationselement versehen ist;
- Fig. 3:: eine teilweise geschnittene Seitenansicht einer anderen Ausführungsform eines Schlosses mit einem Deformationselement;
- Fig. 4:: eine Draufsicht auf das Schloß aus Fig. 3;
- Fig. 5a und b:: spiegelbildliche Draufsichten auf ein aus dem Federbeindom eines Kraftfahrzeugs herausgeschnittenes Teilstück und ein daran befestigtes Deformationselement entsprechend Fig. 4 vor bzw. nach einer Verformung;
- Fig. 6a und b:: perspektivische Ansichten eines Deformationselements entsprechend Fig. 2 vor bzw. nach einer Verformung;
- Fig. 7:: eine teilweise geschnittene Seitenansicht eines Schlosses mit einem Deformationselement, nicht zur Erfindung gehörig
- Fig. 8:: einen Schnitt durch das Deformationselement entlang der Linie 8-8 der Fig. 7;
- Fig. 9:: einen Schnitt durch das Deformationselement entlang der Linie 9-9 der Fig. 7.

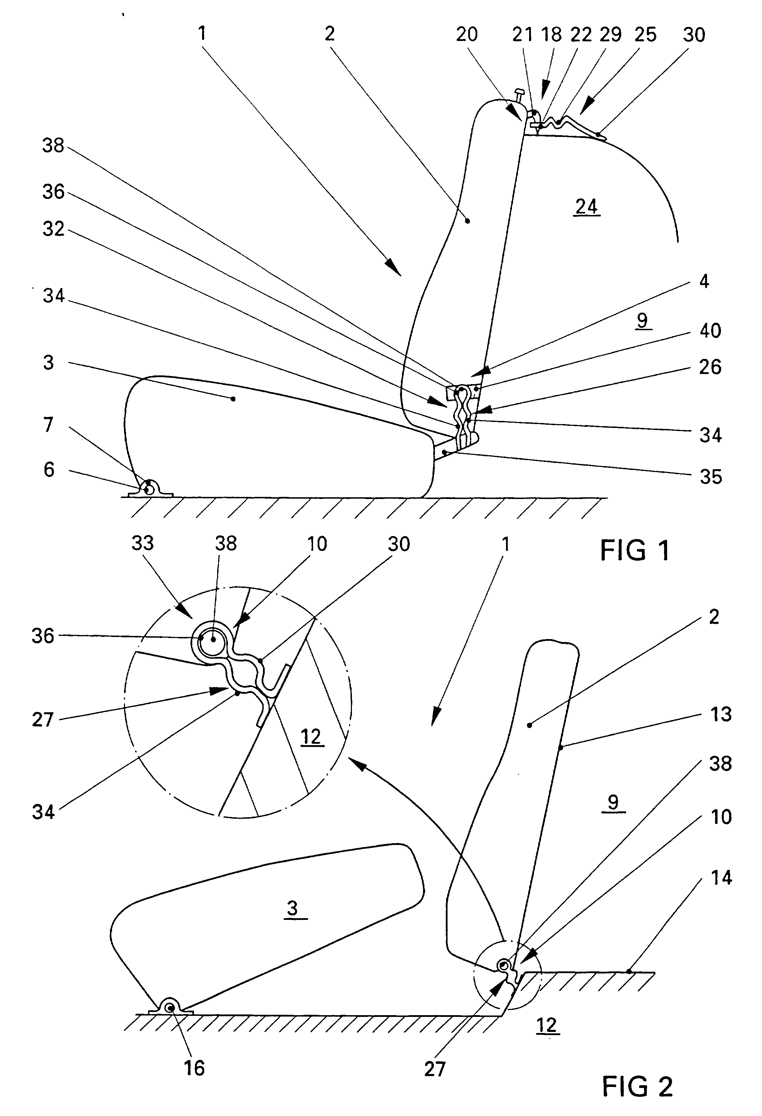

Die in den Figuren 1 und 2 dargestellten Rücksitzanlagen 1 besitzen beide eine umklappbare Rückenlehne 2. Bei dem in Fig. 1 dargestellten Ausführungsbeispiel ist diese in einem zwischen der Rückenlehne 2 und einem Sitzteil 3 angeordneten Schwenklager 4 schwenkbar gelagert, so daß sie nach vorne auf das Sitzteil 3 geklappt und ggf. anschließend zusammen mit diesem um die Schwenkachse 6 eines an der unteren Vorderkante des Sitzteils 3 angeordneten zweiten Schwenklagers 7 nach oben geschwenkt und hochkant gestellt werden kann, um einen hinter der Rücksitzbank 1 angeordneten Gepäckraum 9 zu vergrößern. Bei dem in Fig. 2 dargestellten Ausführungsbeispiel ist ein Schwenklager 10 zwischen der Rückenlehne 2 und einem Teil 12 der Karosserie angeordnet, um die Rückenlehne 2 gegenüber dem Karosserieteil 12 nach vorne zu klappen, so daß ihre Rückseite 13 eine Verlängerung des Gepäckraumbodens 14 bildet, nachdem zuvor der Sitzteil 3 der Rücksitzbank 1 ebenfalls in einem an der unteren Vorderkante des Sitzteils 3 angeordneten zweiten Schwenklager 16 nach vorne geklappt und hochkant gestellt worden ist. Alternativ zu dem in der Zeichnung dargestellten Ausführungsbeispiel kann die Rückenlehne 2 auch auf das feste Sitzteil 3 nach vorn geklappt werden.

Die Rückenlehne 2 kann bei beiden Ausführungsbeispielen geteilt ausgebildet sein, wobei in diesem Fall in der Mitte bzw. im Bereich der Teilung der Rücksitzanlage 1 ein weiteres Schwenklager zwischen der Rückenlehne 2 und dem Sitzteil 3 (Fig. 1) bzw. zwischen der Rückenlehne 2 und dem Karosserieteil 12 (Fig. 2) angeordnet ist, um ein getrenntes Umlegen der beiden Rückenlehnenteile zu ermöglichen (nicht dargestellt). Zur Verriegelung der Rückenlehne 2 in ihrer aufrechten Sitzposition dienen jeweils zwei Schlösser 18 (in Fig. 2 nicht dargestellt), die an den gegenüberliegenden Außenseiten der Rückenlehne 2 angebracht sind und jeweils einen in der Rückenlehne 2 integrierten Verriegelungsmechanismus 20 umfassen. Der Verriegelungsmechanismus 20 weist ein bewegliches Riegelelement 21 auf, das sich mit einem Sicherungselement 22, 23 verrasten läßt, welches jeweils im Bereich von einem der beiden Federbeindome 24 des Kraftfahrzeugs fest mit der Karosserie verbunden ist. Eine umgekehrte Anordnung mit einem karosseriefesten Verriegelungsmechanismus und einem in die Rückenlehnen 2 integrierten Sicherungselement ist allerdings ebenfalls denkbar.

Um zu verhindern, daß die Schlösser 18 und/oder die seitlichen Schwenklager 4, 10 und/oder ggf. ein mittleres Schwenklager der Rückenlehne 2 bei einem Frontalaufprall des Kraftfahrzeugs durch ungesicherte, in Fahrtrichtung nach vorne rutschende oder fliegende und gegen die Rückseite 13 der Rückenlehne 2 prallende Transportgegenstände zerstört werden und dadurch ein Eindringen der Rückenlehne 2 und der Transportgegenstände in den Fahrgastraum gestatten, wo sie insbesondere bei Personen auf der Rücksitzanlage 1 zu schwersten Verletzungen führen können, weisen sowohl die Schlösser 18 als auch die Schwenklager 4, 10 Deformationselemente 25, 26, 27, 28, 29 auf. Alternativ kann das Schwenklager mit dem Deformationselement auch im Bereich der Lehnenteilung karosserieseitig angebunden werden. Die äußeren Schwenklager sind dann starr, d. h. ohne Energieabsorptionselement ausgelegt. Bei dem in der Zeichnung dargestellten Ausführungsbeispiel sind die Deformationselemente 25, 26, 27, 28, 29 so ausgebildet, daß sie sich in einer vorhersagbaren Weise plastisch verformen, wenn eine von hinten auf die Rückenlehne 2 einwirkende Kraft einen vorgegebenen Wert übersteigt. Bei der plastischen Verformung der Deformationselemente 25, 26, 27, 28, 29 wird die kinetische Energie der Transportgegenstände mindestens teilweise in Verformungsarbeit umgewandelt. Die Deformationselemente 25, 26, 27, 28, 29 sind so angeordnet, daß sich bei ihrer Verformung die Rückenlehne 2 ein Stück in Fahrtrichtung bewegt. Das Abbremsen der Transportgegenstände erfolgt somit weniger abrupt, d.h. mit einer geringeren Bremsbeschleunigung, was eine Reduzierung der auf die Schlösser 18 und die Schwenklager 4, 10 einwirkenden Kräfte zur Folge hat.

Bei den in den Figuren 1 bis 6 dargestellten Ausführungsbeispielen umfaßt das Deformationselement 25, 26, 27, 28 jeweils einen bzw. zwei wellen- oder zickzackförmige Teilbereiche, die bei Überschreiten einer vorgegebenen Kraft auf die Rückseite 13 der Rückenlehne 2 unter Begradigung gestreckt werden, wobei sich das Material plastisch verformt.

Fig. 1 zeigt im Bereich des Schlosses 18 ein Deformationselement 25 in Gestalt eines quer zu seiner Breitseitenfläche wellenförmig gebogenen Blechstreifens 30, dessen flaches hinteres Ende so nach hinten und unten gebogen ist, daß es gegen die Oberseite des Federbeindoms 24 anliegend mit diesem verschweißt ist. Das vordere Ende ist ebenfalls abgeflacht und weist eine vertikale Durchtrittsöffnung auf, in die das hakenförmige Riegelelement 21 des Verriegelungsmechanismus 20 wie dargestellt in verriegeltem Zustand eingreift. Die Abmessungen, die konstruktive Gestaltung und die Materialeigenschaften des Riegelelements 21, des Verriegelungsmechanismus 20, sowie sämtlicher anderer Elemente des Schlosses 18 sind so gewählt, daß der Blechstreifen 30 sozusagen das schwächte Glied in der Kette bildet und sich unter Strecken verformt, bevor eines der anderen Elemente bricht oder reißt.

Im Bereich des Schwenklagers 4 wird das Deformationselement 26 von einem Drahtbügel 32 gebildet, dessen beide Schenkel 34 ebenfalls eine wellenförmige Gestalt besitzen. Während die parallelen hinteren Enden der Schenkel 34 mit einem über das Sitzteil 3 überstehenden Ausleger 35 verschweißt sind, ist der Bügel 32 im Bereich seines Jochs so geformt, daß dieses zusammen mit einer jeweils angrenzenden ersten Einbiegung der Schenkel 34 eine im wesentlichen kreisförmige Aufnahmeöffnung 36 umschließt, in welcher ein Schwenkbolzen 38 drehbar gelagert ist. Der ggfs. auch rohrförmig ausgebildete Schwenkbolzen 38 ist starr mit einem nach vorne gebogenen Ausleger 40 eines nicht sichtbaren, innerhalb der Rückenlehne 2 horizontal über deren Rückseite 13 verlaufenden Querträgers verbunden und steht seitlich über die Rückenlehne 2 über. Zwischen der Aufnahmeöffnung 36 und ihren freien Enden sind die Schenkel 34 je zweimal nach innen und einmal nach außen gebogen, wobei sie an den Scheitelpunkten der Einwärtsbiegungen gegen einander anliegen. Grundsätzlich kann jedoch auch eine andere Anzahl von Wellen- oder Zickzackbiegungen vorgesehen sein.

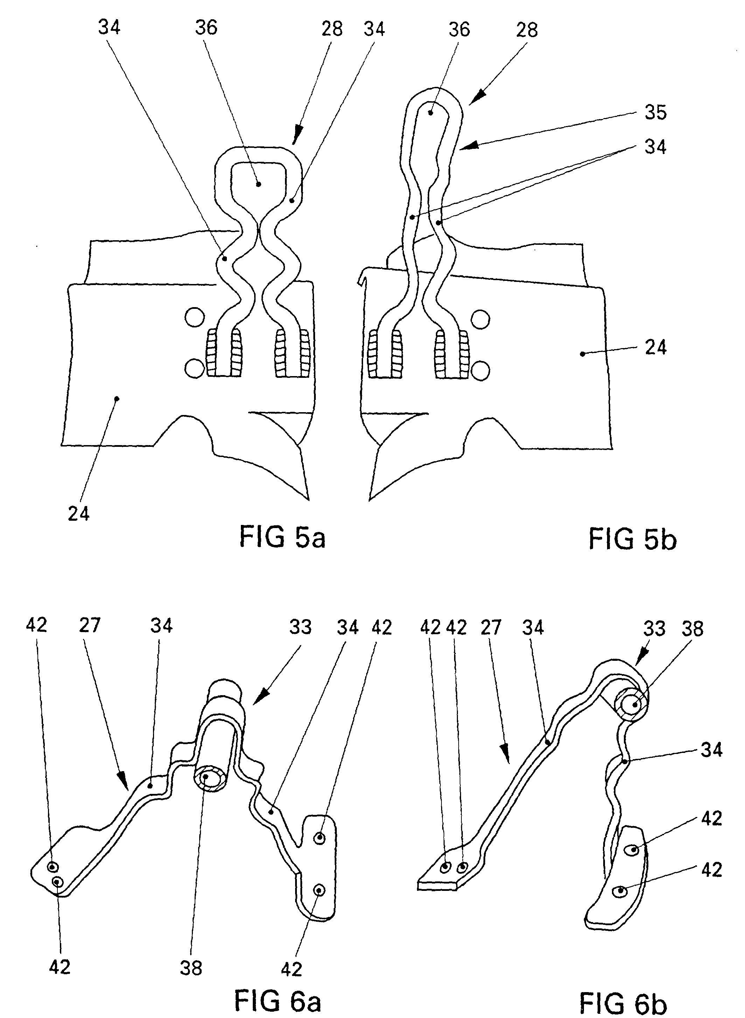

Bei dem in den Figuren 2 und 6a und b dargestellten Ausführungsbeispiel besteht das Deformationselement 27 des Schwenklagers 10 ebenfalls aus einem Bügel 33 mit wellenförmig gebogenen Schenkeln 34, die im Bereich des Jochs so gebogen sind, daß sie eine nahezu geschlossene Aufnahmeöffnung 36 für den über die Rückenlehne 2 überstehenden Schwenkbolzen 38 bilden. Im Unterschied zu dem zuvor beschriebenen Ausführungsbeispiel besteht der Bügel 33 aus einem Blechstreifen, dessen Enden verbreitert sind und Durchtrittsöffnungen 42 für Befestigungsschrauben aufweisen. Anstelle einer Fixierung durch Befestigungsschrauben ist auch eine Festlegung auf einem Karosserieteil mitels CO₂- oder Punktschweißung bzw. einem ähnlichen thermischen Fügeverfahren möglich. Bei einem Frontalaufprall mit einer Geschwindigkeit von etwa 50 km/h und einer Beladung entsprechend DIN 75410 wird der Bügel 33 unter plastischer Verformung und Begradigung eines Teils der wellenförmigen Biegungen gestreckt, wobei jedoch der Schwenkbo/zen/Schwenkrohr 38 nicht freigegeben wird, wie aus Fig. 6b ersichtlich ist, die den Bügel 33 nach dem Aufprall zeigt.

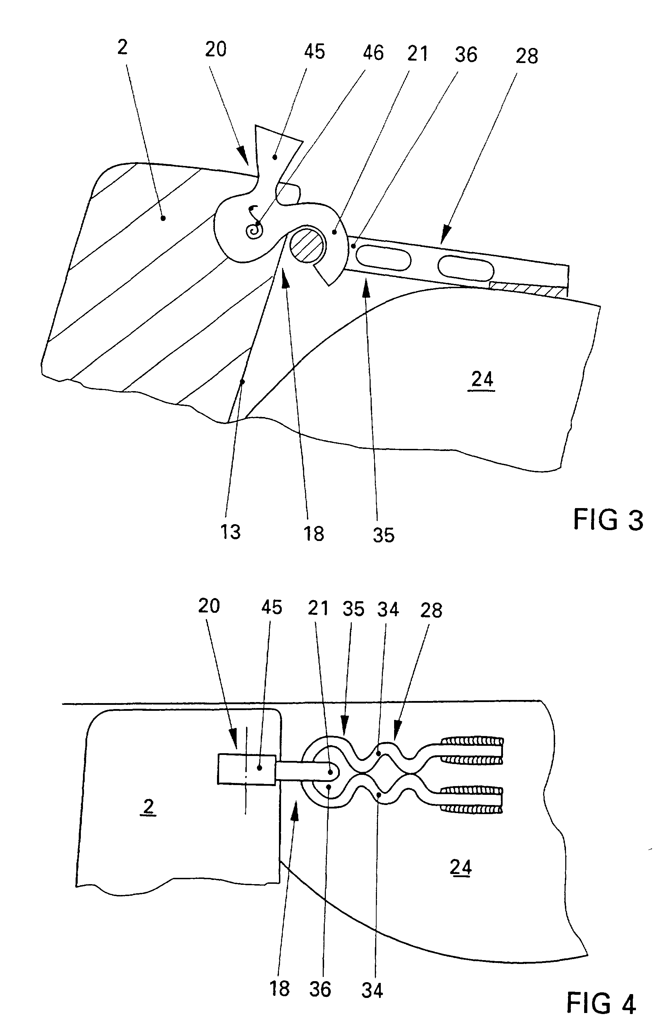

Das in den Figuren 3, 4 und 5 dargestellte Ausführungsbeispiel zeigt ebenfalls ein Deformationselement 28 in Form eines Drahtbügels 35, dessen Schenkel 34 wellenförmig aufeinander zu und voneinander weg gebogen sind, wobei sie hinter dem Joch zusammengeführt sind, so daß zwischen dem Joch und der Zusammenführung eine Aufnahmeöffnung 36 für das freie Ende des gekrümmten Riegelelements 21 des Verriegelungsmechanismus 20 gebildet wird. Das Riegelelement 21 ist zum Lösen der Verriegelung mit Hilfe eines nach oben über die Rückenlehne 2 überstehenden Griffknopfs 45 des Verriegelungsmechanismus 20 entgegen der Kraft einer Feder 46 in einer vertikalen Ebene verschwenkbar, während die vom Bügel 35 umschlossene Aufnahmeöffnung 36 im wesentlichen in einer horizontalen Ebene liegt, so daß das freie Ende des Riegelelements 21 von oben her in die Aufnahmeöffnung 36 und aus dieser heraus geschwenkt werden kann. Die parallelen hinteren Enden der Schenkel 34 sind mit der Oberseite des Federbeindoms, ggfs. auch mit einem separaten Lagerbolzen, 24 verschweißt.

Fig. 5b zeigt den Bügel 35 nach einem frontalen Aufprall des Kraftfahrzeugs im Zuge einer dynamischen Prüfung der Rückenlehne 2 entsprechend DIN 75410, jedoch bei einer höheren Aufprallgeschwindigkeit von etwa 50 km/h. Wie man sieht, wurden die Schenkel 34 des Bügels 35 durch das gegen die Rückenlehne 2 prallende Prüfgewicht unter Begradigung der wellenförmigen Biegungen gestreckt, wobei jedoch ein Eingriff des Riegelelements 21 (in Fig. 5 nicht dargestellt) im Joch aufrechterhalten bleibt.

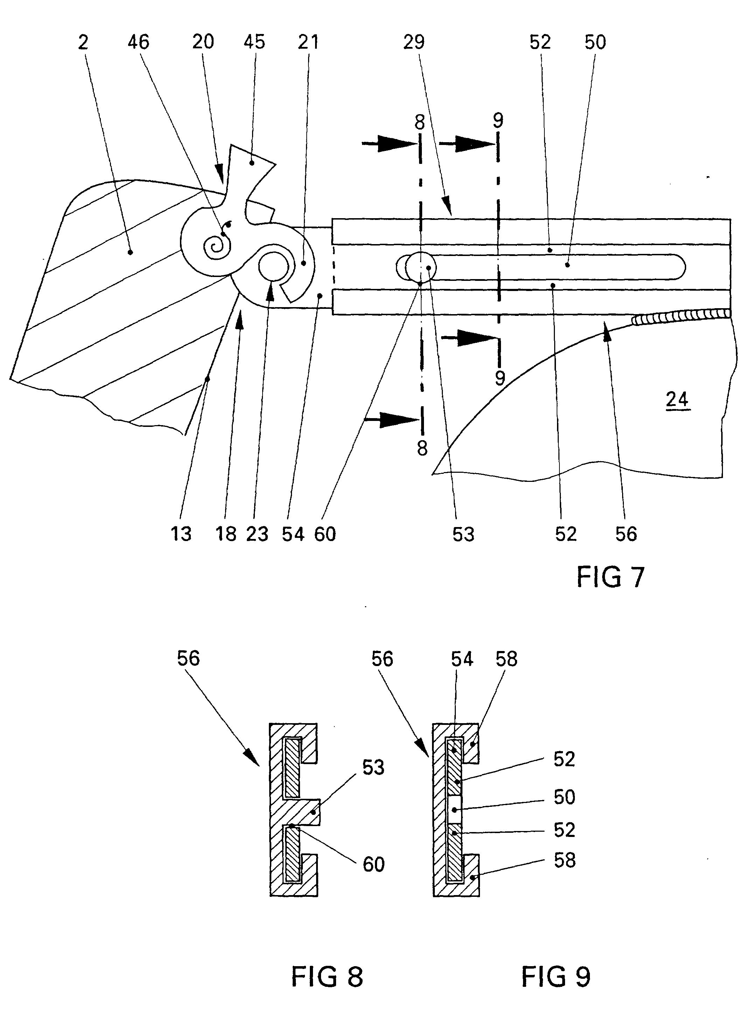

Im Unterschied zu den zuvor beschriebenen Ausführungsbeispielen erfolgt die plastische Verformung des Deformationselements 28 bei dem in den Figuren 7 bis 9 dargestellten Ausführungsbeispiel nicht durch Strecken desselben, sondern durch Aufweiten eines langgestreckten Schlitzes 50 in einem Teil des Deformationselements 28, wobei zwei gegenüberliegende Ränder 52 des Schlitzes 50 von einem Aufweitkörper 53 unter plastischer Verformung auseinandergedrückt werden.

Wie bei dem in Fig. 1 dargestellten Ausführungsbeispiel ist das Deformationselement 28 auch hier nicht unmittelbar im Schloß 18 selbst angeordnet, sondern bildet einen Teil der Halterung des karosseriefesten Sicherungselements 23, das im Unterschied zum Ausführungsbeispiel der Fig. 1 als Bolzen ausgebildet ist. Der Bolzen 23 steht horizontal über ein streifenförmiges Blechstück 54 über, welches in seiner Längsrichtung in einer langgestreckten Aufnahmehalterung 56 verschiebbar gelagert ist. Die Aufnahmehalterung 56 ist an ihrem in Fahrtrichtung nach hinten weisenden Ende mit dem Federbeindom 24 verschweißt und weist ein im wesentlichen C-förmiges Profil auf, wobei ihre beiden einwärts gebogenen Schenkel 58 das Blechstück 54 an dessen Längsseiten umgreifen. Im Blechstück 54 ist der langgestreckte Schlitz 50 ausgebildet, welcher an seinem schloßseitigen Ende mit einer Erweiterung 60 versehen ist, durch die sich der zylindrische, mit der Aufnahmehalterung 56 starr verbundene Aufweitkörper 53 erstreckt. Der Durchmesser des Aufweitkörpers 53 ist größer als die Breite des Schlitzes 50 hinter der Erweiterung, so daß der Schlitz 50 bei einer Längsverschiebung des Blechstücks 54 in Fahrtrichtung infolge einer auf die Rückseite der Rückenlehne 2 einwirkenden Kraft vom Aufweitkörper 53 aufgeweitet wird, der vorzugsweise aus einem härteren Stahl besteht. Dabei wird das Blechstück 54 beiderseits des Schlitzes 50 unter plastischer Verformung auseinander und gegen die Schenkel 58 gedrückt, die dabei ebenfalls etwas aufgebogen werden können. Die plastische Verformung der Ränder 52 des Schlitzes 50 und der Schenkel 58 der Aufnahmehalterung 56 bewirkt eine Umwandlung von kinetischer Energie der Transportgegenstände in Verformungsarbeit. Durch die Verschiebung des Blechstücks 54 in Fahrtrichtung wird zudem der Bremsweg der Transportgegenstände vergrößert, und damit die Krafteinwirkung reduziert.

Der Schlitz 50 kann sich in Richtung des Federbeindoms 54 etwas verjüngen, so daß die zum Aufweiten erforderliche Kraft im Verlauf der Verschiebung des Blechstücks 54 zunimmt.

## Patentansprüche

1. Kraftfahrzeug mit einer Rückbank (1), die eine ganz oder teilweise umlegbare Rückenlehne (2) aufweist, welche unten über mindestens ein Schwenklager (4, 10) schwenkbar mit einer Karosserie (12,14) des Kraftfahrzeugs oder einem Sitzteil (3) der Rückbank (1) und oben über mindestens ein Schloß (18) lösbar mit der Karosserie (12,14) verbunden ist, wobei dem Schloß (18) und/oder dem Schwenklager (4, 10) wenigstens ein Deformationselement (25, 26, 27, 28, 29) zugeordnet ist, das sich bei Überschreiten einer vorgegebenen Kraft auf die Rückenlehne (2) unter Energieaufnahme gezielt plastisch verformt,
**dadurch gekennzeichnet, daß**
- das Deformationselement (25, 26, 27, 28, 29) ein aus einem Blechstreifen oder Draht gebildeter Bügel (32, 33, 35) mit mindestens einem wellen- oder zickzackförmigen Schenkel (34) ist, der sich bei Überschreitung der vorgegebenen Kraft unter Begradigung streckt, und daß
- durch einen Bereich des Bügels (32, 33, 35) eine Aufnahmeöffnung (36) gebildet ist, die im verriegelten Zustand den Schwenkbolzen (38) oder ein Riegelelement (21) umgreift.

2. Kraftfahrzeug nach Anspruch 1, **dadurch gekennzeichnet, daß** ein oberes und/oder unteres Ende der Rückenlehne (2) infolge der plastischen Verformung des Deformationselements (25, 26, 27, 28, 29) gegenüber der Karosserie (12) und/oder dem Sitzteil (3) in Fahrtrichtung nach vorne verschiebbar ist.

3. Kraftfahrzeug nach Anspruch 1 oder 2, **dadurch gekennzeichnet, daß** der Schwenkbolzen (38) bzw. das Riegelelement (21) bei einer plastischen Verformung des Bügels (32, 33, 35) durch eine Krafteinwirkung auf die Rückenlehne (2) vom Bügel (32, 33, 35) festgehalten wird.

4. Kraftfahrzeug nach Anspruch 1, **dadurch gekennzeichnet, daß** der Schwenkbolzen (38) und/oder das Riegelelement (21) senkrecht zu einer vom Bügel (32, 33, 35) aufgespannten Ebene in eine vom Bügel (32, 33, 35) umschlossene Aufnahmeöffnung (36) eingreift.

5. Kraftfahrzeug nach einem der Ansprüche 1 bis 4, **dadurch gekennzeichnet, daß** der Bügel (32, 33, 35) aus einem Stah/draht oder Stahlblechstreifen besteht, der im Bereich der Aufnahmeöffnung (36) umgebogen ist.

6. Kraftfahrzeug nach einem der Ansprüche 1 bis 5, **dadurch gekennzeichnet, daß** der Bügel (32, 33, 35) starr an der Karosserie (12) oder am Sitzteil (3) befestigt ist, und daß das Riegelelement (21) bzw. der Schwenkbolzen (38) über die Rückenlehne (2) übersteht.

7. Kraftfahrzeug nach einem der Ansprüche 1 bis 5, **dadurch gekennzeichnet, daß** der Bügel starr an der Rückenlehne befestigt ist, und daß der Schwenkbolzen und/oder das Riegelelement über die Karosserie oder das Sitzteil überstehen bzw. gegenüber diesen verschwenkbar sind.

8. Kraftfahrzeug nach einem der Ansprüche 1 bis 7, **dadurch gekennzeichnet, daß** das Deformationselement (25, 26, 27, 28, 29) einen Teil des Schwenklagers (4, 10) und/oder des Schlosses (18) bildet.

9. Kraftfahrzeug nach einem der Ansprüche 1 bis 7, **dadurch gekennzeichnet, daß** das Deformationselement (25, 29) zwischen einem Element des Schwenklagers oder Schlosses (18) einerseits und der Karosserie (12) oder dem Sitzteil bzw. der Rückenlehne (2) andererseits angeordnet ist.

## Claims

1. Motor vehicle with a rear seat bench (1) which comprises a back rest (2) which can be wholly or partially folded down and which, at the bottom, is pivotably connected to a body part (12, 14) of the motor vehicle or to a seat part (3) of the rear seat bench (1) by means of at least one pivot bearing (4, 10) and, at the top, is releasably connected to the body part (12, 14) by means of at least one lock (18), wherein the lock (18) and/or the pivot bearing (4, 10) is allocated at least one deformation element (25, 26, 27, 28, 29) which, with absorption of energy, deforms plastically in a controlled manner when a predetermined force on the back rest (2) is exceeded, **characterised in that**
- the deformation element (25, 26, 27, 28, 29) is a clip (32, 33, 35) formed from a sheet metal strip or wire with at least one undulating or zig-zag shaped limb (34) which, when the predetermined force is exceeded, extends so that it becomes straighter, and **in that**
- a receiving aperture (36) is formed by a region of the clip (32, 33, 35) which in the locked state engages around the pivot pin (38) or a lock element (21).

2. Motor vehicle according to claim 1, **characterised in that** an upper and/or lower end of the back rest (2) can be pushed forwards in the direction of travel and with respect to the body (12) and/or the seat part (3) as a result of the plastic deformation of the deformation element (25, 26, 27, 28, 29).

3. Motor vehicle according to claim 1 or 2, **characterised in that** the pivot pin (38) or the lock element (21) is fixedly held by the clip (32, 33, 35) during plastic deformation of the clip (32, 33, 35) by the effect of force exerted on the back rest (2).

4. Motor vehicle according to claim 1, **characterised in that**, at right angles to a plane clamped by the clip (32, 33, 35), the pivot pin (38) and/or the lock element (21) engages into a receiving aperture (36) enclosed by the clip (32, 33, 35).

5. Motor vehicle according to one of claims 1 to 4, **characterised in that** the clip (32, 33, 35) consists of a steel wire or strip of sheet steel, which is bent over in the region of the receiving aperture (36).

6. Motor vehicle according to one of claims 1 to 5, **characterised in that** the clip (32, 33, 35) is rigidly attached to the body (12) or to the seat part (3), and that the lock element (21) or the pivot pin (38) protrudes beyond the back rest (2).

7. Motor vehicle according to one of claims 1 to 5, **characterised in that** the clip is rigidly attached to the back rest and that the pivot pin and/or the lock element protrude beyond the body or the seat part or can be pivoted with respect thereto.

8. Motor vehicle according to one of claims 1 to 7, **characterised in that** the deformation element (25, 26, 27, 28, 29) forms a part of the pivot bearing (4, 10) and/or of the lock (18).

9. Motor vehicle according to one of claims 1 to 7, **characterised in that** the deformation element (25, 29) is disposed between an element of the pivot bearing or of the lock (18) on the one hand and between the body (12) or the seat part or the back rest (2) on the other hand.

## Revendications

1. Véhicule automobile équipé d'une banquette de siège arrière (1) comportant un dossier (2) partiellement ou entièrement rabattable qui, en partie inférieure est relié, de façon à pouvoir pivoter, à une carrosserie (12, 14) du véhicule automobile ou à un élément de siège (3) de la banquette arrière (1) par l'intermédiaire d'au moins un palier pivotant (4, 10), et qui en partie supérieure est relié de façon amovible à la carrosserie (12, 14) par l'intermédiaire d'au moins une serrure (18), au moins un élément de déformation (25, 26, 27, 28, 29) étant associé à la serrure (18) et/ou au palier pivotant (4, 10), lequel se déforme plastiquement de façon ciblée en absorbant de l'énergie lors du dépassement d'une force prédéterminée agissant sur le dossier (2), **caractérisé en ce que**
- l'élément de déformation (25, 26, 27, 28, 29) est un étrier (32, 33, 35) constitué d'une bande de tôle ou de fil d'acier, comportant au moins une branche (34) ondulée ou en forme de zigzag qui s'allonge en se redressant lors du dépassement de la force prédéterminée, et **en ce que**
- à travers une zone de l'étrier (32, 33, 35), il est formé un orifice de réception (36) qui, à l'état verrouillé, entoure l'axe de pivotement (38) ou un élément de verrouillage (21).

2. Véhicule automobile selon la revendication 1, **caractérisé en ce que**, suite à la déformation plastique de l'élément de déformation (25, 26, 27, 28, 29), une extrémité supérieure et/ou inférieure du dossier (2) peuvent être déplacées vers l'avant dans le sens de la marche par rapport à la carrosserie (12) et/ou à l'élément de siège (3).

3. Véhicule automobile selon la revendication 1 ou 2, **caractérisé en ce que**, lors d'une déformation plastique de l'étrier (32, 33, 35) par l'effet d'une force exercée sur le dossier (2), l'axe de pivotement (38) ou l'élément de verrouillage (21) est retenu par l'étrier (32, 33, 35).

4. Véhicule automobile selon la revendication 1, **caractérisé en ce que** l'axe de pivotement (38) et/ou l'élément de verrouillage (21) s'engagent perpendiculairement à un plan projeté par l'étrier (32, 33, 35) dans un orifice de réception (36) entouré par l'étrier (32, 33, 35).

5. Véhicule automobile selon l'une quelconque des revendications 1 à 4, **caractérisé en ce que** l'étrier (32, 33, 35) est constitué d'un fil d'acier ou d'une bande de tôle d'acier, qui est cintré dans la zone de l'orifice de réception (36).

6. Véhicule automobile selon l'une quelconque des revendications 1 à 5, **caractérisé en ce que** l'étrier (32, 33, 35) est fixé rigidement à la carrosserie (12) ou à l'élément de siège (3), et **en ce que** l'élément de verrouillage (21) ou l'axe de pivotement (38) dépasse au-dessus du dossier (2).

7. Véhicule automobile selon l'une quelconque des revendications 1 à 5, **caractérisé en ce que** l'étrier est fixé rigidement au dossier, et **en ce que** l'axe de pivotement et/ou l'élément de verrouillage dépassent de la carrosserie ou de l'élément de siège, ou peuvent être pivotés par rapport à ceux-ci.

8. Véhicule automobile selon l'une quelconque des revendications 1 à 7, **caractérisé en. ce que** l'élément de déformation (25, 26, 27, 28, 29) forme une partie du palier pivotant (4, 10) et/ou de la serrure (18).

9. Véhicule automobile selon l'une quelconque des revendications 1 à 7, **caractérisé en ce que** l'élément de déformation (25, 29) est disposé entre un élément du palier pivotant ou de la serrure (18) d'une part, et la carrosserie (12) ou l'élément de siège ou le dossier (2) d'autre part.
